# EUROPEAN PATENT APPLICATION

(11) **EP 4 628 197 A1**
(43) Date of publication of application: **08.10.2025**
(21) Application number: 25153501.9
(22) Date of filing: 23.01.2025
(51) Int. Cl.: B01D 53/26, F24F 3/14, B01D 53/06

(54) **DEHUMIDIFICATION DEVICE**

(30) Priority: 03.04.2024 JP 2024060424; 03.04.2024 JP 2024150539
(71) Applicant: Seibu Giken Co., Ltd., Koga-shi, Fukuoka 811-3134 (JP)
(72) Inventor: INOUE, Koji, Koga-shi, 811-3134 (JP); FURUKI, Keimei, Koga-shi, 811-3134 (JP); KAKIHARA, Asami, Koga-shi, 811-3134 (JP); NARISHIGE, Shinsaku, Koga-shi, 811-3134 (JP); SAKAI, Haruna, Koga-shi, 811-3134 (JP); MORI, Hiroaki, Koga-shi, 811-3134 (JP); HANADA, Yu, Koga-shi, 811-3134 (JP)
(74) Representative: TBK

(57) **Abstract**

In a dehumidification device, an adsorption rotor having a moisture adsorption capability is divided into at least a processing zone, a regeneration zone, and a purge zone, air to be processed is branched into processing air and purge air, the processing air passes through the processing zone, the air after passing through the processing zone is sent to a supply destination, the purge air passes through the purge zone, the air after passing through the purge zone is caused to pass through a heating device and to pass through the regeneration zone as regeneration air, the air after passing through the regeneration zone is discharged, and the processing air or the purge air passes through a temperature control device to be cooled or heated, thereby suppressing the amount of heat required for regeneration without deteriorating dehumidification performance and achieving energy saving.

## Description

### BACKGROUND OF THE INVENTION

### FIELD OF THE INVENTION

The present invention relates to a dehumidification device that uses a dehumidification rotor as an adsorption rotor and can supply low dew point air with reduced power consumption.

### BACKGROUND ART

In recent years, a demand for lithium batteries has increased, and production thereof has also increased accordingly. In a lithium battery, lithium as a raw material reacts with moisture in the air, and performance of the lithium battery produced deteriorates due to the reaction. Therefore, a production line of the lithium battery needs to be kept in a dry state. As means for keeping the dry state, there are means for purging the inside of a production factory with dried nitrogen, means for using a dehumidification device using a dehumidification rotor including a moisture adsorbing material such as hydrophilic zeolite or silica gel, and the like.

As application of the lithium battery is expanded to automobiles such as electric vehicles and hybrid vehicles, the scale of the production factory is increased, and a large number of means for using the dehumidification device are adopted.

In a case of the dehumidification device, high-temperature air is used for regeneration of the dehumidification rotor, but an attempt is made to reduce energy for generating the air as much as possible. In addition, it is desired to reduce an initial cost.

For example, Japanese Patent No. 7142976 discloses a dehumidification device in which a regeneration temperature is raised by using a cascade-type heat pump, low dew point air is provided by using a single dehumidification rotor, and an initial cost is suppressed. The dehumidification device is more energy-saving as compared with a dehumidification device using an electric heater in the related art.

However, in the heat pump, the initial cost is higher as compared with the electric heater, and there is a limit to raising the regeneration temperature. Therefore, even in a case where the electric heater is used, a study has been made on a flow that is more energy-saving.

In addition, in recent years, a rise in energy prices, tight supply and demand for electric power, and movement toward carbon neutrality have accelerated, and energy saving is required even more.

JP-A-2006-341217 discloses a dehumidifier that can prevent a sensible heat loss caused by transfer of the amount of heat of a regeneration region of the dehumidification rotor to a dehumidification region and can prevent a decrease in dehumidification capability of the dehumidification region which is caused by moisture absorption in a purge region.

JP-A-2012-24665 discloses a gas removal system in which purge sections are installed between a regeneration section and a gas reducing section, and purge air is circulated in a closed system between two purge sections (a first purge section and a second purge section). In the first purge section, the rotor is cooled before moving from the regeneration section to the gas reducing section by the purge air cooled by a cooling device, so that heat carried to the gas reducing section from the regeneration section is suppressed, and water vapor adsorption capability in the gas reducing section is increased. In addition, in the second purge section, the rotor is heated before entering the regeneration section by the purge air heated by heat obtained by cooling the rotor, so that a temperature of the rotor can be raised, and the amount of heating in the regeneration section can be reduced.

JP-A-2017-44387 discloses a dehumidification system having one purge zone and circulating purge air. In a circulation path, a cooler is provided before entering a purge zone to lower a dew point of the purge air, so that moisture is less likely to be adsorbed in the purge zone, the dehumidification capability is increased, and low-temperature regeneration is possible.

As described above, development of a dehumidification flow for energy saving is being promoted.

### SUMMARY OF THE INVENTION

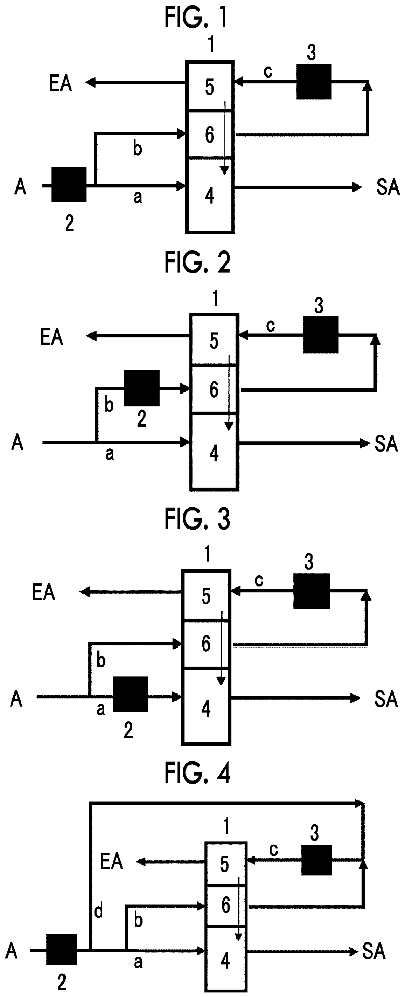

In a dehumidification device using an adsorption rotor including a processing zone, a regeneration zone, and a purge zone, both processing air and purge air are generally caused to pass through a cooler to be cooled (Fig. 1). Cooling of the processing air is performed for pre-dehumidification in which the absolute humidity is lowered due to dew condensation by cooling the processing air to a temperature equal to or lower than a dew point temperature of the processing air before cooling, and to increase dehumidification efficiency by raising a relative humidity of the processing air after cooling to approximately 100% RH. Cooling of the purge air is performed to suppress heat carried from the regeneration zone to the processing zone and to increase adsorption capability, and is performed to set the purge air to a low dew point by pre-dehumidification, to increase dehumidification capability by preventing moisture adsorption in the purge zone, and to improve the regeneration efficiency by using the low dew point air that has passed through the purge zone as the regeneration air. Cooling both the processing air and the purge air works toward better performance. However, since a temperature of the air that has passed through the purge zone is low, there is a problem that more regeneration heat is required and power consumption of the cooler is increased.

The present invention has been made in order to solve the above-described problems, and an object of the present invention is to provide a dehumidification device that has a simple configuration as compared with a dehumidification device in the related art, can reduce an initial cost, can suppress an amount of heat required for regeneration without deteriorating a dehumidification performance, and can supply low dew point air with energy saving.

In a dehumidification device of the present invention, an adsorption rotor having an adsorption capability for moisture is divided into at least a processing zone, a regeneration zone, and a purge zone, air to be processed is branched into processing air and purge air, the processing air passes through the processing zone, the air after passing through the processing zone is sent to a supply destination, the purge air passes through the purge zone, the air after passing through the purge zone is caused to pass through a heating device and passes through the regeneration zone as regeneration air, the air after passing through the regeneration zone is discharged, and the processing air or the purge air passes through a temperature control device to be cooled or heated.

In the dehumidification device of the present invention, only either the processing air or the purge air is set to the air passing through the cooler, the amount of heat required for regeneration can be reduced without deteriorating dehumidification performance with a simple configuration, and energy saving can be achieved.

When only the purge air is set as the air passing through the cooler, it is not necessary to cool the processing air, and thus the energy saving effect is achieved. In addition, there is an effect that the cooling effect of the rotor is enhanced by cooling the purge air, and there is an effect that the amount of moisture adsorbed to the rotor in the purge zone is reduced by dehumidifying the purge air, and an adsorption effect in the processing zone can be enhanced.

When only the processing air is set as the air passing through the cooler, it is not necessary to cool the purge air, and thus the energy saving effect is achieved. In addition, since the purge air is not cooled, a purge outlet temperature increases, and the output of the regeneration heater can be lowered, so that the energy saving effect is achieved.

### BRIEF DESCRIPTION OF THE DRAWINGS

Fig. 1 is a general dehumidification flow (Comparative Example 1) in the related art.
Fig. 2 is a flowchart of Example 1 of a dehumidification device of the present invention.
Fig. 3 is a flowchart of Example 2 of the dehumidification device of the present invention.
Fig. 4 is a flowchart of Example 3 of the dehumidification device of the present invention.
Fig. 5 is a flowchart of Example 4 of the dehumidification device of the present invention.
Fig. 6 is a flowchart of Example 5 of the dehumidification device of the present invention.
Fig. 7 is a flowchart of Example 6 of the dehumidification device of the present invention.
Fig. 8 is a dehumidification flow of a general two-stage adsorption rotor in the related art (Comparative Example 2).

### DETAILED DESCRIPTION OF THE INVENTION

In a dehumidification device of the present invention, an adsorption rotor having an adsorption capability for moisture is divided into at least a processing zone, a regeneration zone, and a purge zone, air to be processed is branched into processing air and purge air, the processing air passes through the processing zone, the air after passing through the processing zone is sent to a supply destination, the purge air passes through the purge zone, the air after passing through the purge zone is caused to pass through a heating device and passes through the regeneration zone as regeneration air, the air after passing through the regeneration zone is discharged, and the processing air or the purge air passes through a temperature control device to be cooled or heated. Note that, the present invention is not limited to the following embodiment.

### Example 1

Hereinafter, Example 1 of the dehumidification device of the present invention will be described with reference to a flowchart of Fig. 2. A configuration of Example 1 includes an adsorption rotor 1 as a dehumidification rotor having a moisture adsorption capability, a temperature control device 2, and a heating device 3. As the adsorption rotor 1, a honeycomb rotor of a base material consisting of inorganic fibers such as glass fibers, on which an adsorbing material such as zeolite or silica gel is carried, is used. The adsorption rotor 1 is divided into a processing zone 4, a regeneration zone 5, and a purge zone 6, and is rotationally driven in this order by a gear motor (not shown) or the like. The temperature control device 2 is, for example, a cooling water coil, a brine coil, or an evaporator of a heat pump as a cooler, and is, for example, an electric heater, a steam heater, a hot water heater, or a condenser of a heat pump as a heater. In addition, the heating device 3 is, for example, an electric heater, a steam heater, a hot water heater, a condenser of a heat pump, or the like. Hereinafter, unless otherwise noted, the temperature control device 2 will be described as a cooler.

As shown in Fig. 2, air A to be processed is branched into the processing air a and the purge air b before passing through the adsorption rotor 1, and the processing air a and the purge air b are sent to the processing zone 4 and the purge zone 6, respectively. The processing air a passes through the processing zone 4, and becomes air from which moisture is removed, and is sent to a supply destination such as a production facility, a dry room, or the like as supply air SA. The purge air b before passing through the purge zone 6 passes through the temperature control device 2 to be cooled. The air passes through the purge zone 6, and the air that has passed through the purge zone 6 is caused to pass through the heating device 3 and then passes through the regeneration zone 5. The air that has passed through the regeneration zone 5 is discharged and exhausted to the outside of the dehumidification device, such as the atmosphere.

Example 1 of the present invention has the above-described configuration, and details thereof will be described below. The air A to be processed containing moisture is branched into the processing air a introduced into the processing zone 4 and the purge air b introduced into the purge zone 6. The processing air a passes through the processing zone 4, moisture is adsorbed and removed by the adsorbing material carried on the adsorption rotor 1, and dry air is supplied to the supply destination. The purge air b is cooled by the temperature control device 2 and then passes through the purge zone 6. The cooled air is caused to pass through the purge zone 6 to cool the adsorbing material of the adsorption rotor 1 of which a temperature has increased in the regeneration zone 5 and to restore the adsorption performance. The air that has passed through the purge zone 6 is sent to the heating device 3, is heated to a temperature sufficient for desorbing moisture from the adsorbing material of the adsorption rotor 1 (for example, 80°C to 200°C. All temperatures are "Celsius" hereinafter), and is sent to the regeneration zone 5 as regeneration air c. The air that has passed through the regeneration zone 5 is discharged to the outside of the dehumidification device, such as the atmosphere.

As described above, in the dehumidification device of Example 1, the cooling effect of the rotor is enhanced by cooling the purge air b by the temperature control device 2. Since the purge air b is dehumidified, the amount of moisture adsorbed to the rotor in the purge zone 6 is reduced, and the adsorption effect in the processing zone 4 is enhanced. The regeneration efficiency is also improved by using the low dew point air, which is dehumidified by cooling and passes through the purge zone 6, as the regeneration air. In addition, since the processing air a is not cooled by the temperature control device 2, power consumption of the temperature control device 2 is reduced, and a reduction in the cooling capacity can be accomplished.

In the flow of Fig. 2, the adsorption rotor 1 is rotated in the order of the processing zone 4, the purge zone 6, and the regeneration zone 5 by rotating the adsorption rotor 1 in a reverse direction. By heating the purge air b by using the temperature control device 2 as a heater, the temperature of the purge air b before entering the regeneration zone 5 can be raised, and the adsorption rotor 1 can be preheated in the purge zone 6. In addition, the adsorption rotor 1 can be regenerated in two stages of the purge zone 6 and the regeneration zone 5 to enhance a moisture desorption effect.

### Comparative Example 1

Fig. 1 is a general dehumidification flow in the related art (Comparative Example 1). Description of a portion overlapping with Fig. 2 will be omitted. In Fig. 1, the air A to be processed is branched into the processing air a and the purge air b after passing through the temperature control device 2, and each of the processing air a and the purge air b passes through the processing zone 4 and the purge zone 6. Therefore, there is a difference in that both the processing air a and the purge air b are cooled, the cooling capacity of the temperature control device 2 is larger than that of Example 1, and both the initial cost and the running cost are high.

Here, it is common sense for those skilled in the art that the processing air before passing through the processing zone is pre-dehumidified by a cooler to reduce an absolute humidity and to lower the temperature to increase a relative humidity, and then the processing air is introduced into the processing zone, and this is a matter of course as described in Japanese Patent No. 7142976, JP-A-2006-341217, JP-A-2012-24665, and JP-A-2017-44387. On the contrary, the idea of not cooling the processing air before passing through the processing zone may deteriorate the dehumidification performance, and thus it is difficult for those skilled in the art to easily come up with the idea without giving up the fixed concept.

According to Example 1, since the processing air a does not pass through the temperature control device 2, a processing outlet temperature is high. Therefore, the present invention is suitable for use as a drying application. By performing the temperature adjustment of the purge air b to a limit at which the moisture adsorption in the purge zone 6 is suppressed and the cooling of the purge zone 6 can also be performed, it is possible to further enhance the energy saving effect of the temperature control device 2.

### Example 2

Hereinafter, Example 2 of the dehumidification device of the present invention will be described with reference to a flowchart of Fig. 3. Description of a portion overlapping with the above-described example will be omitted. In Example 2, the air A to be processed is branched, the processing air a that passes through the processing zone 4 is cooled by the temperature control device 2 and passes through the processing zone 4, and the purge air b is not cooled and passes through the purge zone 6 as it is.

Example 2 of the present invention has the above-described configuration, and details thereof will be described below. The air A to be processed is, for example, outside air mixed with return air from a dry room, and in a case of a temperature of 25°C and an absolute humidity of 0.6 g/kg (DA), a temperature of air that has passed through the temperature control device 2 is lowered to 14°C. That is, in Example 2 (Fig. 3), the processing air a becomes air having a temperature of 14°C and an absolute humidity of 0.6 g/kg (DA) after passing through the temperature control device 2, and is introduced into the processing zone 4. On the other hand, since the purge air b does not pass through the temperature control device 2, the purge air b is introduced into the purge zone 6 at 25°C and 0.6 g/kg (DA). The air that has passed through the purge zone 6 has a temperature of 70°C and an absolute humidity of 0.4 g/kg (DA), and is introduced into the heating device 3.

Comparison with Comparative Example 1 (Fig. 1), which is a general dehumidification flow in the related art, will be performed. In Fig. 1, the air A to be processed having a temperature of 25°C and an absolute humidity of 0.6 g/kg (DA) passes through the temperature control device 2, becomes air having a temperature of 14°C and an absolute humidity of 0.6 g/kg (DA), and is branched into the processing air a and the purge air b. The purge air b having a lowered temperature passes through the purge zone, becomes air having a temperature of 59°C and an absolute humidity of 0.3 g/kg (DA), and is introduced into the heating device 3.

A temperature after passing through the purge zone is higher in Example 2 by 11°C as compared with Comparative Example 1. The amount of dehumidification in the purge zone 6 (the amount of change in absolute humidity before and after passing through the purge zone) is 0.2 g/kg (DA) in Example 2 and is 0.3 g/kg (DA) in Comparative Example 1. From this, in a case where the purge air b does not pass through the temperature control device 2, air having a higher temperature is obtained after passing through the purge zone, and the amount of dehumidification in the purge zone 6 is reduced. In a case where the temperature of the purge air b is high, the cooling effect of the adsorption rotor 1 is reduced, and the adsorption performance deteriorates. In addition, the adsorption of moisture in the purge zone 6 is less likely to occur, and the low dew point air is not generated in the purge zone 6, which also deteriorates the desorption performance. However, in a case where the dew point of the air A to be processed is low as in the case of -20°C DP, even in a case where the amount of dehumidification in the purge zone is decreased, the air to be processed is dry air, and thus the influence on the desorption performance is small. In the above case, the dew point of the supply air SA in both Comparative Example 1 and Example 2 is in an ultra-low dew point region of around -70°C DP, and there is no significant difference in practical use, and it can be said that the dehumidification performance is almost the same. Therefore, in a case where the air A to be processed is low dew point air, the effect of not causing the purge air b to pass through the temperature control device 2 is large. In addition, by suppressing the amount of dehumidification in the purge zone 6, there is also an effect of increasing the amount of dehumidification in the processing zone 4. Since the temperature control device 2 may cool only the processing air a, the cooling capacity can also be reduced.

As described above, according to Example 2, since the purge air b is not cooled, the temperature of the air after passing through the purge zone 6 is higher than that in a case where the purge air b is cooled. As a result, the output of the heating device 3 can be reduced, and energy saving is achieved. In addition, since the temperature control device 2 may cool only the processing air a, the temperature control device 2 can also reduce the cooling capacity.

Although there is a slight deterioration in performance in Example 2 as compared with the general flow (Comparative Example 1) in the related art in which the purge air b is also cooled as shown in Fig. 1, the influence on practical use is not significant, and the energy saving effect is large.

Here, it is common sense for those skilled in the art that the processing air and the purge air before passing through the processing zone and the purge zone are pre-dehumidified as shown in Fig. 1 by a cooler to reduce the absolute humidity and to lower the temperature to increase the relative humidity, and then the processing air and the purge air are introduced into the processing zone and the purge zone. The idea of not cooling the purge air before passing through the purge zone deteriorates the dehumidification performance, and thus it is difficult for those skilled in the art to easily come up with the idea without giving up the fixed concept.

### Example 3

Hereinafter, Example 3 of the dehumidification device of the present invention will be described with reference to a flowchart of Fig. 4. Description of a portion overlapping with the above-described example will be omitted. In Example 3, the air A to be processed is cooled by the temperature control device 2 and is branched into air (processing air a + purge air b) that passes through the processing zone 4 and the purge zone 6, respectively, and air d for mixing (hereinafter, referred to as "mixing air d") with air after passing through the purge zone to be regeneration air. Air after passing through the processing zone 4 is sent to a supply destination as supply air SA. The air after passing through the purge zone 6 is mixed with the mixing air d branched from the air A to be processed, is caused to pass through the heating device 3, and passes through the regeneration zone 5 as the regeneration air c. The air after passing through the regeneration zone 5 is discharged and exhausted to the outside of the dehumidification device, such as the atmosphere.

Example 3 of the present invention has the above-described configuration, and the details thereof will be described below. The air A to be processed is, for example, outside air, and passes through the temperature control device 2 to have a temperature of 10°C and an absolute humidity of 7 g/kg (DA) (relative humidity of 92 %RH). The cooled air A to be processed is branched such that a flow rate ratio is processing air a:purge air b:mixing air d = 9:1:2. That is, the flow rate ratio of the regeneration air c is a flow rate ratio of 3 obtained by adding the flow rate ratio of 2 of the mixing air d and the flow rate ratio of 1 of the purge air b. Therefore, the flow rate ratio is processing zone 4:regeneration zone 5:purge zone 6 = 9:3:1. Purge zone outlet air has a temperature of 120°C and an absolute humidity of 6 g/kg (DA), and is mixed with the mixing air d and is heated to a regeneration inlet temperature of 160°C by the heating device 3. A temperature of the air after passing through the regeneration zone 5 is 50°C, and a temperature of the supply air SA after passing through the processing zone 4 is -52°C DP.

Comparison with Fig. 1 showing a general dehumidification flow in the related art (Comparative Example 1) will be performed. In Fig. 1, the air A to be processed passes through the temperature control device 2 to be air having a temperature of 10°C and an absolute humidity of 7 g/kg (DA) (relative humidity of 92 %RH), and is branched such that the flow rate ratio is processing air a:purge air b = 3:1. Therefore, the flow rate ratio of processing zone 4:regeneration zone 5:purge zone 6 is 3:1:1. Purge zone outlet air has a temperature of 60°C and an absolute humidity of 0.6 g/kg (DA) (-20°C DP), and is heated to a regeneration inlet temperature of 160°C by the heating device 3. A temperature of the air after passing through the regeneration zone 5 is 40°C, and a temperature of the supply air SA after passing through the processing zone 4 is -48°C DP.

In Example 3 and Comparative Example 1, although the conditions of the air A to be processed and the regeneration inlet temperature are the same, the dew point of the supply air SA in Example 3 is lower and the performance is better. This is considered to be because, in Example 3, the flow rate of the purge air is reduced to 1/3 of that in the comparative example, and the adsorption of moisture on the rotor is reduced. In the case of Comparative Example 1, a large amount of moisture is adsorbed in the purge zone 6 before entering the processing zone 4, and the amount of adsorption in the processing zone 4 is reduced. Regarding the regeneration outlet temperature, Example 3 is higher than Example 1 by 10°C. The air on the regeneration outlet side is air having high humidity, and in a case where the regeneration outlet temperature is low, there is a possibility that dew condensation occurs on the regeneration outlet side. Therefore, Example 3 in which the regeneration outlet temperature is high has an effect of preventing dew condensation on the regeneration outlet side. The heating capacity of the heating device 3 is the same in both Comparative Example 1 and Example 3.

As described above, according to Example 3, by mixing the mixing air d obtained by branching a part of the air A to be processed with the air after passing through the purge zone to obtain the regeneration air c, the flow rate of the purge air b can be reduced, and the moisture adsorption on the rotor in the purge zone 6 can be reduced. Therefore, the adsorption performance of the adsorption rotor 1 in the processing zone 4 is enhanced, and the dehumidification performance is improved.

### Example 4

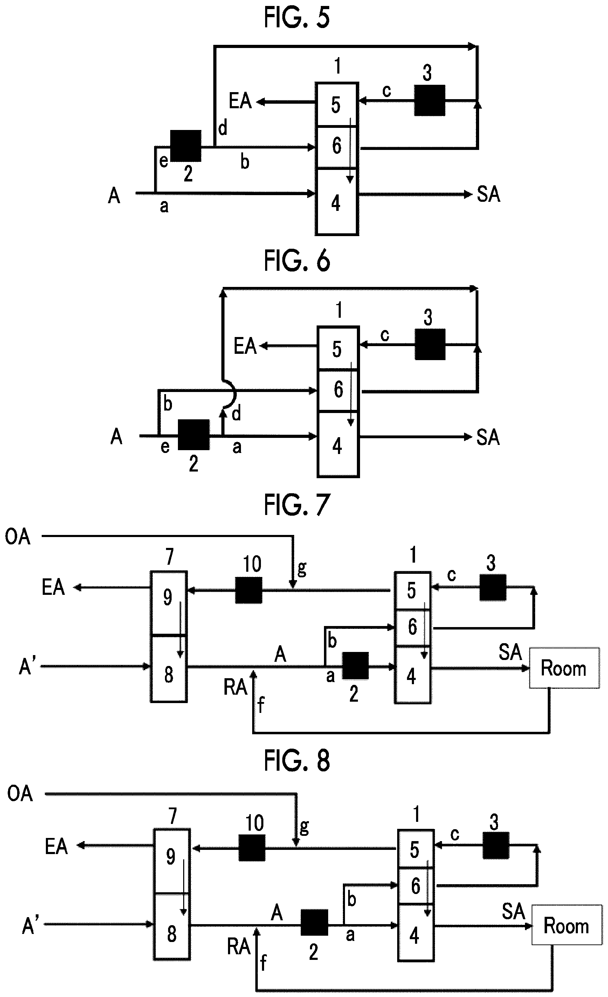

Hereinafter, Example 4 of the dehumidification device of the present invention will be described with reference to a flowchart of Fig. 5. Description of a portion overlapping with the above-described example will be omitted. In Example 4, the air A to be processed is branched into the processing air a and branch air e, the processing air a passes through the processing zone 4 as it is, and the air after passing through the processing zone 4 is sent to a supply destination as supply air SA. The branch air e is cooled by the temperature control device 2, and is used as purge air b that passes through the purge zone 6, and mixing air d that is partially branched and is to be mixed with air after passing through the purge zone.

The purge air b is cooled by the temperature control device 2 in the same manner as in Example 1, thereby enhancing the cooling effect of the rotor. In addition, since the purge air b is dehumidified by cooling and the flow rate of the purge air b is reduced as in Example 3, the amount of moisture adsorbed to the rotor in the purge zone 6 is reduced, and the adsorption effect in the processing zone 4 is enhanced. In addition, since the processing air a is not cooled by the temperature control device 2, it is possible to reduce the cooling capacity of the temperature control device 2. In addition, as in Example 1, since the processing air a is not passed through the temperature control device 2 in Example 4, the processing outlet temperature is high. Therefore, the present invention is suitable for use as a drying application.

### Example 5

Hereinafter, Example 5 of the dehumidification device of the present invention will be described with reference to the flowchart of Fig. 6. Description of a portion overlapping with the above-described example will be omitted. In Example 5, the air A to be processed is branched into the purge air b and the branch air e, and the purge air b passes through the purge zone 6 as it is. The branch air e is cooled by the temperature control device 2 and is branched into two, and is used as the processing air a to be passed through the processing zone 4 and the mixing air d to be mixed with the air after passing through the purge zone.

In the same manner as in Example 2, the purge air b is not cooled, and thus the purge outlet temperature is higher as compared with a case where the purge air b is cooled. As a result, the output of the heating device 3 can be reduced, and energy saving is achieved. In addition, since only the branch air e may be cooled, the temperature control device 2 can also reduce the cooling capacity. In addition, in the same manner as in Example 3, since the flow rate of the purge air b is small, the amount of moisture adsorbed to the rotor in the purge zone 6 is reduced, and the adsorption effect in the processing zone 4 is enhanced.

In the flows of Examples 1 to 5, in order to supply air having a lower dew point to the supply destination, in a case of being configured as a two-stage adsorption rotor, a first adsorption rotor 7 is disposed in a front stage, and the adsorption rotor 1 is disposed in a rear stage as a second adsorption rotor 1 in the flow. Although it depends on the conditions of the air A to be processed, the dew point of the supply air SA in the single-stage adsorption rotor 1 of Examples 1 to 5 is limited to approximately -50°C. However, in a case where the two-stage adsorption rotor is used, the dew point of the supply air SA can be set to an ultra-low dew point such as -80°C DP or even -90°C DP.

### Example 6

Hereinafter, Example 6 of the dehumidification device of the present invention will be described with reference to the flowchart of Fig. 7. Description of a portion overlapping with the above-described example will be omitted. In Example 6, the first adsorption rotor 7 is disposed in a front stage of the adsorption rotor 1 (second adsorption rotor 1) of Example 2. In addition, the temperature control device 2, a second heating device 3, and a first heating device 10 are included. The first adsorption rotor 7 in the front stage is divided into at least a first processing zone 8 and a first regeneration zone 9. The second adsorption rotor 1 and the first adsorption rotor 7 are each rotationally driven by a gear motor (not shown) or the like. The temperature control device 2 may be used as a second temperature control device, and a first temperature control device may be added before the first processing zone 8 of the first adsorption rotor 7.

As shown in Fig. 7, air A' to be processed passes through the first processing zone 8 of the first adsorption rotor 7 in the front stage, and the air after passing through the first processing zone is mixed with return air RA(f) from a supply destination (room) such as a production facility or a dry room, and becomes air A to be processed, which is sent to the second adsorption rotor 1. The air A to be processed is branched into the processing air a and the purge air b before passing through the second adsorption rotor 1. The processing air a is caused to pass through the temperature control device 2 to be cooled and passes through a second processing zone 4. The air from which moisture has been removed after passing through the second processing zone 4 is sent to a supply destination (room). The purge air b is caused to pass through the second heating device 3 after passing through a second purge zone 6, and passes through the second regeneration zone 5 as regeneration air c. The air that has passed through the second regeneration zone 5 is partially mixed with outside air OA (g), passes through the first heating device 10, is heated to a temperature sufficient to desorb moisture from the first adsorption rotor 7, passes through the first regeneration zone 9, and is discharged to the outside of the dehumidification device, such as the atmosphere. Note that, the outside air OA (g) and the exhaust air EA that has passed through the first regeneration zone 9 may be subjected to heat exchange by a heat exchanger. The air g mixed with the regeneration air is not limited to the outside air OA, and another air such as the return air RA may be used, or the outside air OA (g) may not be mixed in the flow. In addition, the return air RA(f) may be mixed with the air A' to be processed without being mixed between the first adsorption rotor 7 and the second adsorption rotor 1 and may be introduced into the first adsorption rotor 7, or may be discharged from the supply destination as the return air RA without being mixed.

Example 6 of the present invention has the above-described configuration, and the details thereof will be described below. In a case where a temperature of the air A' to be processed containing moisture has a temperature of 10°C and an absolute humidity of 7 g/kg (DA), the air A' to be processed passes through the first processing zone 8 of the first adsorption rotor 7, and the moisture is adsorbed and removed by the adsorbing material. The temperature and the absolute humidity of the air A to be processed mixed with the return air RA (f) from the supply destination are 25°C and 0.6 g/kg (DA), respectively. The processing air a obtained by branching the air A to be processed passes through the temperature control device 2, is adjusted to a temperature of 10°C and an absolute humidity of 0.6 g/kg (DA), and passes through the second processing zone 4. The supply air SA that has passed through the second processing zone 4 and from which moisture has been adsorbed and removed by the adsorbing material is ultra-low dew point air at 15°C and -73°C DP, and is sent to the supply destination. The purge air b has a temperature of 25°C and an absolute humidity of 0.6 g/kg (DA), and a temperature thereof becomes 66°C after passing through the second purge zone 6. The air that has passed through the second purge zone 6 passes through the second heating device 3, is heated to 140°C, passes through the second regeneration zone 5, and desorbs moisture from the adsorbing material. The air that has passed through the second regeneration zone 5 is mixed with the outside air OA (g), is heated by the first heating device 10, and passes through the first regeneration zone 9 of the first adsorption rotor 7, moisture is desorbed from the adsorbing material, and the air is discharged to the outside of the dehumidification device, such as the atmosphere.

### Comparative Example 2

Fig. 8 shows a general two-stage adsorption rotor dehumidification flow (Comparative Example 2) in the related art in which a first adsorption rotor 7 is disposed in a front stage of the general dehumidification flow (Fig. 1, Comparative Example 1) in the related art. Description of a portion overlapping with Fig. 7 will be omitted. In Fig. 8, the air A to be processed passes through the temperature control device 2 to be cooled, and then is branched into the processing air a and the purge air b, and the processing air a and the purge air b pass through the second processing zone 4 and the second purge zone 6 of the second adsorption rotor 1. As in Fig. 7, in a case where the air A' to be processed has a temperature of 10°C and an absolute humidity of 7 g/kg (DA), the air A to be processed passes through the first processing zone 8 of the first adsorption rotor 7 and is mixed with the return air RA(f) from the supply destination (room), and the air A to be processed has a temperature of 25°C and an absolute humidity of 0.6 g/kg (DA). The air A to be processed passes through the temperature control device 2, is set to have a temperature of 10°C and an absolute humidity of 0.6 g/kg (DA), is branched into the processing air a and the purge air b, and passes through the second processing zone 4 and the second purge zone 6, respectively. The supply air SA that passes through the second processing zone 4 and is sent to the supply destination has a temperature of 14°C and a DP of - 75°C. A temperature of the air that has passed through the second purge zone 6 is 58°C.

Example 6 (Fig. 7) and Comparative Example 2 (Fig. 8), which is a general two-stage adsorption rotor dehumidification flow in the related art, will be compared with each other. The temperature after passing through the second purge zone 6 is higher by 8°C in Example 6 as compared with Comparative Example 2. For this reason, as in Example 2, by not causing the purge air b to pass through the temperature control device 2, air having a higher temperature is obtained after passing through the purge zone. Therefore, the heating capacity of the second heating device 3 can be reduced in Example 6. In a case where the temperature of the air passing through the second purge zone 6 is high, the cooling effect of the second adsorption rotor 1 is reduced, and the desorption performance may deteriorate. However, in Example 6, since dry air, which has been dehumidified in the front stage, is mixed with the return air RA from the supply destination, the low dew point air having DP of -20°C is obtained, and thus the influence on the desorption performance is small. In the above case, the dew point of the supply air SA is higher by 2°C DP in Example 6, but there is no significant difference in practical use since it is in the ultra-low dew point region, and the dehumidification performance can be said to be almost the same. Therefore, in a case where the air A to be processed is low dew point air, the effect of not causing the purge air b to pass through the temperature control device 2 is large. In addition, the cooling capacity of the temperature control device 2 can be reduced. Note that, although the temperature of the supply air SA is higher by 1°C in Example 1, in a case where the temperature is adjusted to, for example, 25°C at the supply destination, there is an effect of reducing the air conditioning load at the supply destination.

In the above-described examples, when the air to be processed is in a condition of high humidity such as, for example, a temperature of 10°C and an absolute humidity of 7 g/kg (DA) (relative humidity of 92% RH), immediately after the start of operation of the dehumidification device, the regeneration outlet side of the adsorption rotor is not warmed, so that there is a concern that the air that has passed through the regeneration zone is condensed and the dehumidification performance deteriorates. Therefore, at the start of the operation of the device, the regeneration outlet temperature is increased by lowering the rotation speed from an optimum rotation speed to warm the regeneration outlet side, and the air that has passed through the regeneration zone is prevented from being condensed. It is preferable to return to the optimum rotation speed after the regeneration outlet side is warmed, and to perform steady operation.

In the above-described examples, the purge air b branched from the air A to be processed is passed through the purge zone 6, but the present invention is not limited thereto, and other air such as the outside air OA, the air that has passed through the processing zone 4, and the return air RA from the supply destination may be used. The air to be passed through the processing zone 4 or the purge zone 6 may be connected to a pipe through which the outside air OA, the return air RA, or the like passes, and a flow rate adjusting device such as a valve or a damper and a flow path switching device such as a three-way valve may be provided in the pipe to adjust the flow rate of the air flowing into each zone or to switch the type of the air. In addition, the temperature control device 2 may be provided in front of the processing zone 4 and the purge zone 6, respectively, and the processing air a and/or the purge air b may be cooled or heated as necessary. Similarly, in Examples 3 to 5, the position of the temperature control device 2 is not limited to those shown in Figs. 4 to 6, and the air a, the air b, the air d, and the air e may be cooled alone or in combination. Further, another zone may be provided in the adsorption rotors 1 and 7. The air after passing through the processing zone 4 may not be supplied to the supply destination and may be discharged. The air after passing through the regeneration zone 5 may be supplied to the supply destination without being discharged, and the present invention is not limited thereto. In a case where the two-stage adsorption rotor is configured, the flow of the second adsorption rotor 1 is not limited to the flow of Example 2 and may be combined with the flows of Examples 1 and 3 to 5.

The present invention provides a dehumidification device that can suppress costs and enable energy saving operation without reducing the dehumidification performance for a manufacturing process that requires a dry state, such as the production of a lithium battery.

## Claims

1. A dehumidification device, comprising:
an adsorption rotor having a moisture adsorption capability,
wherein the adsorption rotor is divided into at least a processing zone, a regeneration zone, and a purge zone and is rotated in this order,
air to be processed is branched into processing air and purge air,
the processing air passes through the processing zone, and the air after passing through the processing zone is sent to a supply destination,
the purge air passes through the purge zone, and the air after passing through the purge zone is caused to pass through a heating device and to pass through the regeneration zone as regeneration air, and
the processing air or the purge air passes through a temperature control device.

2. The dehumidification device according to claim 1, wherein the air to be processed is branched into the processing air, the purge air, and mixing air, the mixing air and the air after passing through the purge zone are mixed, and the mixed air is caused to pass through the heating device and to pass through the regeneration zone as regeneration air.

3. The dehumidification device according to claim 2, wherein the air to be passed through the temperature control device includes the mixing air in addition to either the processing air or the purge air.

4. The dehumidification device according to any one of claims 1 to 3, wherein the purge air passes through the temperature control device, the adsorption rotor is rotated in a reverse direction to rotate in the order of the processing zone, the purge zone, and the regeneration zone, and the purge air is heated by the temperature control device.

5. The dehumidification device according to any one of claims 1 to 3, wherein the temperature control device is a cooler.

6. A dehumidification device, comprising:
a first adsorption rotor and a second adsorption rotor that have a moisture adsorption capability,
wherein the first adsorption rotor is divided into at least a first processing zone and a first regeneration zone,
the second adsorption rotor is divided into at least a second processing zone, a second regeneration zone, and a second purge zone,
air to be processed passes through the first processing zone,
the air after passing through the first processing zone is sent to the second processing zone and/or the second purge zone of the second adsorption rotor,
the air after passing through the second processing zone is sent to a supply destination,
the air after passing through the second purge zone is caused to pass through a second heating device and to pass through the second regeneration zone as regeneration air,
the air after passing through the second regeneration zone is mixed with outside air, passes through a first heating device, and passes through the first regeneration zone,
the air after passing through the first regeneration zone is discharged, and
the second adsorption rotor is the adsorption rotor of the dehumidification device according to any one of claims 1 to 3.

7. The dehumidification device according to claim 6, wherein return air from the supply destination is mixed with the air after passing through the first processing zone.
